# EUROPEAN PATENT SPECIFICATION

(11) **EP 1 826 186 B1**
(45) Date of publication and mention of the grant of the patent: **02.01.2013**
(21) Application number: 07003939.1
(22) Date of filing: 26.02.2007
(51) Int. Cl.: C03B 23/03, C03B 23/035, C03B 23/025, C03B 35/20, C03B 40/00

(54) **Method for bending a glass sheet and apparatus therefor**
Verfahren zum Biegen einer Glasscheibe und Vorrichtung dafür
Procédé et appareil de courbure d'une feuille de verre

(30) Priority: 27.02.2006 JP 2006051033
(43) Date of publication of application: 29.08.2007
(73) Proprietor: Asahi Glass Company, Limited, Chiyoda-ku Tokyo 100-8405 (JP)
(72) Inventor: Inoue, Nobuhiro,, Chiyoda-ku, Tokyo 100-8405, (JP)
(74) Representative: Müller-Boré & Partner Patentanwälte

(56) References cited:
- DE-A1- 1 471 864
- DE-A1- 2 836 013
- JP-A- 2005 170 766
- US-A- 4 092 141

## Description

The present invention relates to a method for bending a glass sheet and an apparatus therefor, in particular a method for bending a glass sheet and an apparatus therefor, which are appropriate to bend a glass sheet in a complicated bent shape.

Recent window glass for buildings or automobiles has been required to have various shapes and curvatures, which are influenced by a change in design. In particular, backlites for automobiles have needed curved glass, which is formed in a complicated bent shape having a large amount of deformation and having deformation limited only in one portion thereof, such as glass having a folded vertical or transverse section.

As an example of the apparatus for producing curved glass, there has been known a pressing apparatus used in a heating furnace (e.g., patent document 1). This pressing apparatus presses a glass sheet between a press ring and a male mold to bend the glass sheet in a shape along the bending surface of the male mold after heating the glass sheet to a lower temperature than the glass softening point (about 640°C) during the conveyance of the glass sheet in a roller hearth furnace, and transferring the heated glass sheet onto the press ring.

It is difficult to produce curved glass having a deeply bent shape, such as a folded glass sheet, in the pressing apparatus disclosed in patent document 1 since this pressing apparatus has a deformation limitation in terms of shape because of using a roller hearth furnace that cannot heat a glass sheet to a temperature beyond the glass softening point. When producing such a glass sheet, it is necessary to bend a glass sheet with the bending temperature level raised in order to decrease the glass viscosity, i.e., to bend a glass sheet that has been heated to a temperature close to the softening point. However, it is impossible to increase the bending temperature level to a temperature close to the softening point in a roller hearth furnace where a glass sheet is conveyed by rollers, and even small impact during the roller conveyance easily damages or deforms the surface of the glass sheet to lower the quality of the glass sheet.

An apparatus for bending a glass sheet, which can solve this problem, has been disclosed in patent document 2. This bending apparatus puts a glass sheet on a flat glass carrier and fixes the glass sheet to the glass carrier by a clamp frame for surrounding the bending area of the glass sheet in a holding zone having a room temperature. The glass carrier has an opening formed in a portion thereof corresponding to the bending area in order to hold the bending area of the glass sheet in a non-contact state up to bending operation and to easily heat the bending area to a bending temperature of not less than the softening point. In the heating zone of this bending apparatus, the bending area is heated to a temperature close to the softening point (e.g., heated to a temperature of about 670°C to 830°C in the case of soda lime glass), being put in such a non-contact state while the glass sheet is fixed to the glass carrier by the clamp frame, and the glass sheet is softened to have a viscosity of 10⁵ Pa·s or above to 10⁸ Pa·s or below there. After that, the bending area of the glass sheet is pressed against a female mold having a certain bending surface and is brought into contact with the bending surface to be bent along the bending surface, followed by trimming an unnecessary portion of the glass sheet by a cutter in the bending/trimming zone of the bending apparatus.

According to the bending apparatus disclosed in patent document 2, it is possible to produce curved glass, which is formed in a complicated bent shape along the bending surface of the female mold and has high quality, being free from damage or deformation, since the glass sheet is fixed to the glass carrier while the bending area of the glass sheet is softened and brought into close contact with the bending surface of the female mold, being held in a non-contact state.
Patent document 1: JP-A-64-52628
Patent document 2: JP-A-2005-170766

However, since the bending apparatus disclosed in patent document 2 heats a glass sheet, fixing the glass sheet to the glass carrier by the clamp frame, the bending apparatus cannot prevent the deformation of the glass sheet caused during heating, with the result that there is a possibility that stresses concentrate in a certain position in the glass sheet to break the glass sheet.

Although it is possible to solve this problem by heating a glass sheet while putting the glass sheet on the glass carrier, a second problem is caused by the fact that the glass sheet falls down from the opening of the glass carrier before conveying into the bending/trimming zone since the glass sheet has already been softened by heating. The second problem can be solved by setting a peripheral end area outside the bending area of a glass sheet so as to be sufficiently larger than the bending area. However, this solution causes another problem in that an unnecessary increase in such a peripheral end area to be trimmed increases the waste portion of the glass sheet and makes the glass carrier a heavy jig.

It is an object of the present invention to solve the above-mentioned problems and to provide a method for bending a glass sheet and an apparatus therefor, which are capable of conveying a glass sheet, being prevented from falling the glass sheet up to a bending process, putting, in a non-contact state, an area of the glass sheet to be formed in a desired shape and keeping good surface quality in this area, even if the bending area of the glass sheet is heated to a certain bending temperature in order to produce curved glass formed in a complicated bent shape having a large amount of deformation.

In order to attain the object, the present invention provides a method for bending a glass sheet, comprising a heating step for heating a glass sheet while putting the glass sheet on a conveying jig, the glass sheet having a bending area and a peripheral end area; a conveying step for conveying the glass sheet heated in the heating step, to a mold by the conveying jig; a bending step for bending the bending area of the glass sheet into a desired shape by the mold; and a trimming step for trimming the peripheral end area of the bent glass sheet; characterized in that the conveying jig is configured to be smaller than the outline of the glass sheet as seen in a plan view and to include a ring-shaped member corresponding to the peripheral end area, and the conveying jig is adapted to convey the glass sheet, supporting at least one portion of the peripheral end area by the ring-shaped member; and that in the bending step, at least one portion of the peripheral end area of the glass sheet is sandwiched and held between a clamping member and a peripheral portion of the mold, followed by bending the bending area by the mold corresponding to the bending area.

In order to attain the object, the present invention also provides an apparatus for bending a glass sheet, comprising a heating section for heating a glass sheet while putting the glass sheet on a conveying jig, the glass sheet having a bending area and a peripheral end area; a conveying section for conveying the glass sheet heated in the heating step, to a mold by the conveying jig; a bending section for bending the bending area of the glass sheet into a desired shape by the mold; and a trimming section for trimming the peripheral end area of the bent glass sheet; characterized in that the conveying jig is configured to be smaller than the outline of the glass sheet as seen in a plan view and to include a ring-shaped member corresponding to the peripheral end area; and that the bending section includes a clamping member, and is configured so that at least one portion of the peripheral end area of the glass sheet is sandwiched and held between the clamping member and a peripheral portion of the mold, followed by bending the bending area by the mold corresponding to the bending area.

In accordance with the method and the apparatus for bending a glass sheet, according to the present invention, it is possible to prevent a glass sheet from being broken due to stress concentration caused by thermal deformation in the glass sheet, since the glass sheet is heated to a temperature close to the softening point, being carried on the ring-shaped member of the conveying jig. Further, when the glass sheet is heated to such a temperature close to the softening point, not only the bending area of the glass sheet, which is located inside the ring-shaped member, is sagged by its own weight, but also the peripheral end area of the glass sheet, which is located outside the ring-shaped member, is sagged by its own weight. As a result, the peripheral end area of the glass sheet is engaged with (hooked over) the ring-shaped member to prevent the glass sheet from falling from inside the ring-shaped member. In this way, the glass sheet is conveyed through the heating step, being stably held on the conveying jig, without falling before reaching the bending step.

Accordingly, even if the bending area of the glass sheet is heated to such a certain bending temperature in order to produce curved glass formed in a complicated bent shape having a large amount of deformation, the glass sheet can be conveyed, being in a non-contact state and keeping good surface quality, without falling before reaching the bending step, in accordance with the present invention.

In accordance with the conveying jig, what is required is that the form of the ring-shaped member projected on a horizontal plane is larger than the outline of finally cut-out glass and smaller than the outline of the glass sheet before heating operation. Accordingly, it is not necessary to produce different conveying jigs for different forms of glass sheets to be bent, and it is possible to commonly use a single conveying jig for a group of glass sheets, which are close to each other in terms of the sizes of forms to be bent.

It is preferred that at least one portion of the ring-shaped member of the conveying jig be formed so as to be smaller than the outline of the glass sheet by 30 mm or above as seen in a plan view, when loading the glass sheet on the conveying jig.

In this mode, at least one portion of the ring-shaped member of the conveying jig is formed so as to be smaller than the outline of the glass sheet by 30 mm or above, preferably 50 mm or above, as seen in a plan view, when loading the glass sheet on the conveying jig. The ring-shaped member of the conveying jig can have an engagement function of hooking the peripheral end area of the glass sheet thereover, irrespectively of the size of the glass sheet.

It is preferred that the glass sheet be heated until the glass sheet acquires such a bending temperature so as to have a viscosity of 10⁵ Pa·s or above to 10⁸ Pa·s or below in the heating step.

In this mode, in the heating step, the glass sheet is heated until the glass sheet acquires such a bending temperature close to the softening point so as to have a viscosity 10⁵ Pa·s or above to 10⁸ Pa·s or below (e.g., about 670°C to 800°C for soda lime glass used in automobile glass). When the glass sheet is heated so as to have a viscosity in this range, the glass sheet is produced as bent glass formed in a shape along a complex shape of the mold and having good quality. When the glass sheet is heated, the bending area of the glass sheet may be forcibly heated by a gas burner in addition to an electric heater. The glass sheet may be preliminarily heated so as to have a viscosity level of not less than 10⁸ Pa·s (such as, in the range of 670°C or below) by an additionally disposed heating unit, followed by putting the glass sheet on the conveying jig, and heating the glass sheet so that the glass sheet can have such a bending temperature so as to have a viscosity of 10⁵ Pa·s or above to 10⁸ Pa·s or below in the heating step.

It is preferred that the peripheral end area of the glass sheet acquire such a glass temperature so as to have a viscosity of 10¹⁰ Pa·s or below before the bending area of the glass sheet has acquired such a glass temperature so as to have a glass viscosity of 10¹¹ Pa·s in the heating step or in a step prior to the heating step.

In this mode, a temperature increase in the peripheral end area of the glass sheet precede that in the bending area in the heating step or in a step prior to the heating step. When the production conditions are set so that the peripheral end area acquire such a glass temperature so as to have a viscosity of 10¹⁰ Pa·s or below before the bending area has acquired a glass viscosity of 10¹¹ Pa·s as in this mode, the deformation in the peripheral end area is promoted to reliably engage the peripheral end area of the glass sheet with the ring-shaped member. In this way, it is possible to prevent the glass sheet from falling from inside the ring-shaped member. Accordingly, the glass sheet, which has been heated to a temperature close to the softening point, is stably held on the conveying jig. Since the amount by which a flat glass sheet to be prepared protrudes from the conveying jig is minimized, it is possible to perform the bending process by using a glass sheet having a minimum size.

It is preferred that the ring-shaped member of the conveying jig be formed in a circular shape in section.

In this mode, the form accuracy of the ring-shaped member does not directly affect the bending area since the bending area of the glass sheet, which is finally cut out, is smaller than the ring-shaped member of the conveying jig for the glass sheet. Since the form accuracy of the ring-shaped member is not required to have the same level of dimensional accuracy required for glass products, it is possible to simplify the structure of the ring-shaped member, specifically to produce the ring-shaped member by bending a solid round bar, which is used as a versatile material. Further, the conveying jig has a simple structure to have the ring-shaped member. Even if a plurality of conveying jigs are produced to be used as conveying jigs for performing heating operation in the heating step, the production costs are low, and a sharp decrease in heat capacity caused by a weight reduction of the conveying jig for heating operation can contribute to energy saving in the heating step.

It is preferred that the conveying jig be made of heat resistant steel, such as stainless steel, and have a mold-releasing material applied or a coating having a good mold-releasing property applied to a surface thereof in order to prevent the glass sheet from being firmly stuck thereon.

In this mode, the conveying jig is made of heat resistant steel, such as stainless steel because of being used in a heating zone and a bending/trimming zone, each of which is at a high temperature. Further, it is possible to prevent the glass sheet from being firmly stuck to the conveying jig during conveyance for heating operation since the conveying jig has such a mold-releasing material applied or such a coating having a good mold releasing property applied thereon.

It is preferred that the clamping member be formed in an annular shape and have a convex portion formed on a surface confronting the peripheral portion of the mold, that the peripheral portion of the mold have a concave portion formed thereon so as to correspond to the convex portion of the clamping member, and that the peripheral portion of the mold and the clamping member clamp the glass sheet therebetween to hold the glass sheet on the peripheral portion of the mold as if the convex portion and the concave portion are engaged with each other.

In this mode, since the glass sheet is sandwiched between the clamping member and the peripheral portion of the mold as if the convex portion and the concave portion are engaged with each other, the sealability at the time of sandwiching the glass sheet between the clamping member and the peripheral portion of the mold can be improved, with the result that bending operation is performed with high precision in addition to a reduction in the bending time.

It is preferred that the glass sheet have a ring-shaped seal put on a side of the peripheral end area thereof confronting the mold, and that the glass sheet be held on the peripheral portion of the mold through the ring-shaped seal by being sandwiched between the clamping member and the peripheral portion of the mold.

In this mode, when the glass sheet is sandwiched between the clamping member and the peripheral portion of the mold, the glass sheet is held on the peripheral portion of the mold through the ring-shaped seal. Accordingly, the sealability at the time of sandwiching the glass sheet between the clamping member and the peripheral portion of the mold is improved, with the result that bending operation is performed with high precision in addition to a reduction in the bending time.

It is preferred that the bending step comprise bending the bending area of the glass sheet along a bending surface of the mold by vacuum operation and/or blowing operation.

In this mode, in order to form a sealed space by the bending area of the glass sheet and the bending surface of the mold (female mold), the clamping member and the mold, which are disposed in the bending/trimming zone, are brought close to each other, and the peripheral end area of the glass sheet corresponding to the peripheral portion of the mold is forcibly sandwiched between the clamping member and the peripheral portion of the mold. After that, the bending area is forcibly bent along the bending surface of the mold by evacuating the air in the seal space by a suction unit connected to the mold. Or, the bending area may be forcibly bent along the bending surface by forming an exhaust hole in the mold and by giving a blowing pressure to a lower surface of the glass sheet.

It is preferred that the bending step comprise bending the bending area of the glass sheet along the bending surface of the mold by pressing a male mold against the bending area.

In this mode, in order to hold the peripheral end area of the glass sheet at the time of bending the glass sheet, the clamping member and the mold (female mold), which are disposed in the bending/trimming zone, are brought close to each other, and the peripheral end area of the glass sheet corresponding to the peripheral portion of the mold is forcibly sandwiched between the clamping member and the peripheral portion of the mold. After that, the male mold, which has a bending surface substantially matching the bending surface of the mold, is brought toward the mold and is forcibly pressed against the mold, bending the bending area in a shape along the bending surface of the mold.

In accordance with the method for bending a glass sheet and the apparatus therefor of the present invention, it is possible to produce curved glass with high precision since even if the bending area of the glass sheet is heated to such a certain bending temperature in order to bend the glass sheet in a complicated bent shape having a large amount of deformation, the glass sheet can be conveyed, being prevented from falling up to the bending process, while the area of the glass sheet to be formed in a desired shape is put in a non-contact state with the conveying jig and has good surface quality kept therein.

In the drawings:
Fig. 1 is a side view showing the structure of the apparatus for bending a glass sheet, according to an embodiment of the present invention;
Fig. 2 is an enlarged cross-sectional view showing essential portions of the apparatus shown in Fig. 1;
Figs. 3A to 3C are plan views of a conveying jig used in the apparatus shown in Fig. 1;
Figs. 4A and 4B are enlarged cross-sectional views showing bending operation of the apparatus shown in Fig. 1;
Figs. 5A and 5B are enlarged cross-sectional views showing different bending operation of the apparatus; and
Figs. 6A and 6B are enlarged cross-sectional views showing different bending operation of the apparatus.

Now, preferred embodiments of the method for bending a glass sheet and the apparatus therefor of the present invention will be described in detail, referring to the accompanying drawings.

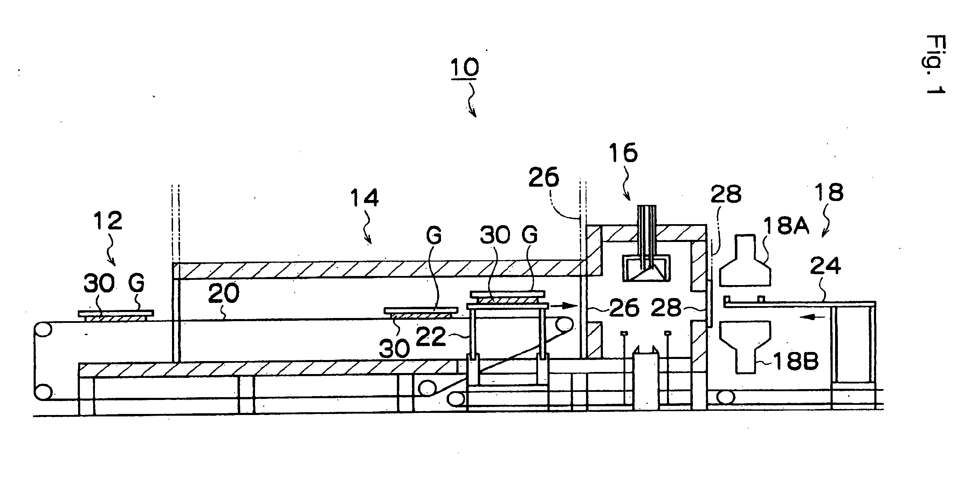

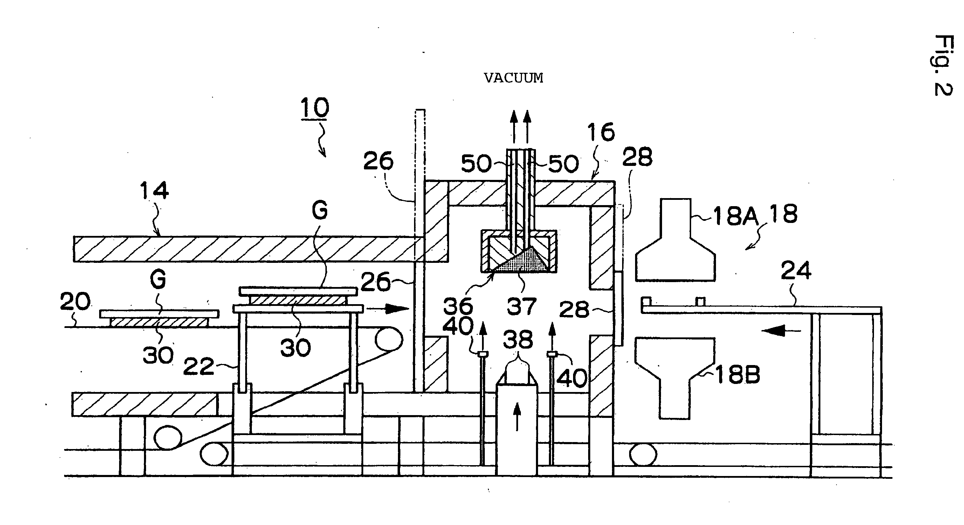

Fig. 1 is a schematic cross-sectional side view showing the structure of the apparatus for bending a glass sheet 10, according to an embodiment of the present invention. Fig. 2 is an enlarged cross-sectional view showing essential portions of the apparatus 10 shown in Fig. 1. As shown in Fig. 1, this apparatus 10 comprises a loading zone 12, a heating zone (a heating step or a heating section) 14, a bending/trimming zone (a bending step and a trimming step, or a bending section and a trimming section) 16 and the like from an upstream side of a process for bending a glass sheet. On the downstream side of the bending/trimming zone 16, an air-cooling and tempering position 18 is disposed to temper a glass sheet by air-cooling after bending.

According to the apparatus 10, the conveyance of a glass sheet from the loading zone 12 into the heating zone 14 and the conveyance of a glass sheet in the heating zone 14 are made by a chain conveyor 20. The transfer of a glass sheet from the heating zone 14 into the bending/trimming zone 16 is made by a transferring unit 22 having a lift. The transfer of a glass sheet from the bending/trimming zone 16 into the air-cooling tempering zone 18 is made by a transferring unit 24. The transfer of a glass sheet into the bending/trimming zone 16 is made by selectively opening and closing an upstream door 26 of the bending/trimming zone 16 in synchronization with the transferring operation of the transferring unit 22. The transfer of a glass sheet into the air-cooling zone 18 is made by selectively opening and closing a downstream door 28 of the bending/trimming zone 16 in synchronization with the transferring operation of the transferring unit 24. The air-cooling zone 18 comprises an upper blower 18A and a lower blower 18B, and a glass sheet G, which has been conveyed in between the upper blower 18A and the lower blower 18B, is air-cooled and tempered by cooling air blown out of the upper blower 18A and the lower blower 18B.

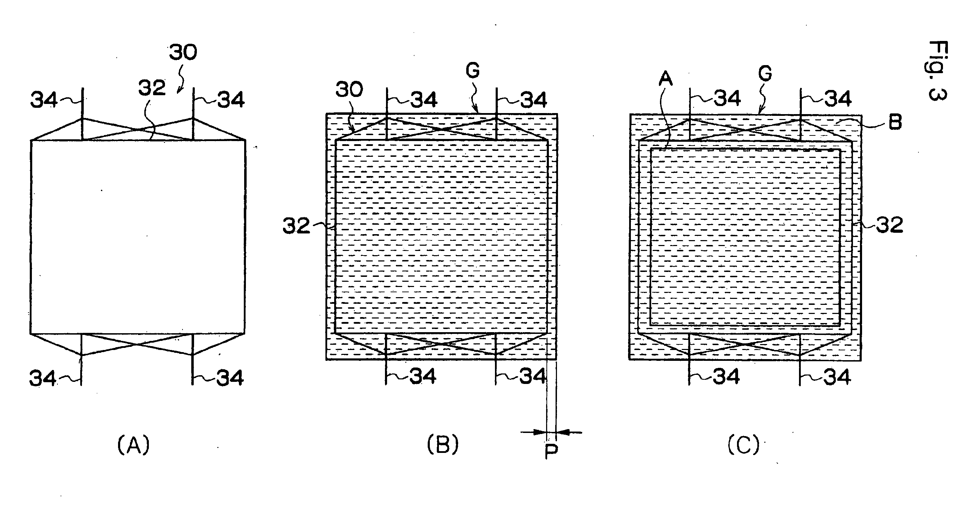

In the loading zone 12, the glass sheet G, which is formed in a flat shape, is held on a conveying jig 30 shown in Fig. 3(A), being at a room temperature. The conveying jig comprises a rectangular ring-shaped member 32 for carrying a glass sheet G thereon and bar-shaped engagement members 34 engaged with the chain conveyor 20. The glass sheet G is put on the ring-shaped member 32 so that a rectangular bending area A of the glass sheet is positioned inside the ring-shaped member 32 of the conveying jig 30 as seen in a plan view as shown in Figs. 3 (B) and (C). In other words, at least one portion of a peripheral end area B of the glass sheet G, which is positioned outside the bending area A, is supported by the ring-shaped member 32 of the conveying jig 30 since the glass sheet G is larger than the ring-shaped member 32 of the conveying jig 30 as seen in a plan view. By this arrangement, the glass sheet G is put on the conveying jig 30 without falling from the conveying jig 30 by its own weight.

In the conveying jig 30, the entire portion that corresponds to the bending area A forms an opening in order to easily heat the bending area A of the glass sheet G to a bending temperature close to the softening point while keeping the bending area A in a non-contact state up to the bending operation performed in the bending/trimming zone 16. Although the bending area A is indicated by a solid line in Fig. 3(C), it should be noted that the solid line is used only for indicating the bending area and that the solid line is not depicted on the glass sheet G.

A glass sheet G has such a property that when the glass sheet has a glass viscosity of less than 10¹¹ Pa·s (for example, when the glass sheet has a higher temperature than 580°C), the glass sheet starts being softened and is sagged, being deformed by its own weight. However, the bending area A and the peripheral end area B of the glass sheet G are both sagged downward by their own weights, using the ring-shaped member 32 as a boundary, since the glass sheet G in a flat shape is larger than the ring-shape portion 32 of the conveying jig as seen in a plan view. This phenomenon causes the peripheral end area B to be hooked over (engaged with) the ring-shaped member 32, with the result that the glass sheet G is stably held on the conveying jig 30 until the glass sheet is heated to the bending temperature close to the softening point while the bending area A is prevented from falling out of the opening inside the ring-shaped member 32.

At least one portion of the ring-shaped member 32 of the conveying jig 30 is formed so as to be smaller than the outline of the glass sheet G by 30 mm or above, preferably 50 mm or above, when loading the glass sheet on the conveying jig. The size of the at least one portion is indicated by width P in Fig. 3(B).

When at least one portion of the ring-shaped member 32 of the conveying jig 30 is formed so as to be smaller than the outline of the glass sheet G at the loading time by 30 mm or above, preferably 50 mm or above, the ring-shaped member can have an engagement function of hooking the peripheral end area B of the glass sheet G over the ring-shaped member 32 irrespectively of the size of the glass sheet G.

In the heating zone 14 shown in Fig. 1, the glass sheet G is heated to such a bending temperature (such as a temperature of 670°C to 830°C) so as to have a viscosity of 10⁵ Pa·s or above to 10⁸ Pa·s or below, being conveyed by the chain conveyer 20. The heating zone 14 comprises a heating furnace, which has electric heaters disposed therein. The heating zone may forcibly heat the bending area A of the glass sheet G by gas burners in addition to the electric heaters. The glass sheet G may be preliminarily heated so as to have a viscosity of not less than 10⁸ Pa·s (e.g., at a temperature of 670°C or below) by an additionally disposed heating unit before the glass sheet G is put on the conveying jig 30 to be heated to such a bending temperature to have a viscosity of 10⁵ Pa·s or above to 10⁸ Pa·s or below in the heating zone 14.

At a downstream portion in the heating zone 14 shown in Fig. 2, the glass sheet G that has acquired the above-mentioned bending temperature is transferred, along with the conveying jig 30, in the bending/trimming zone 16 by the transferring unit 22.

The bending/trimming zone 16 has a female mold (mold) 36 disposed at an upper portion, a trimming cutter 38 disposed so as to cut out the bending area A of the glass sheet G and a ring-shaped clamping member 40 disposed so as to surround the trimming cutter 38 therein.

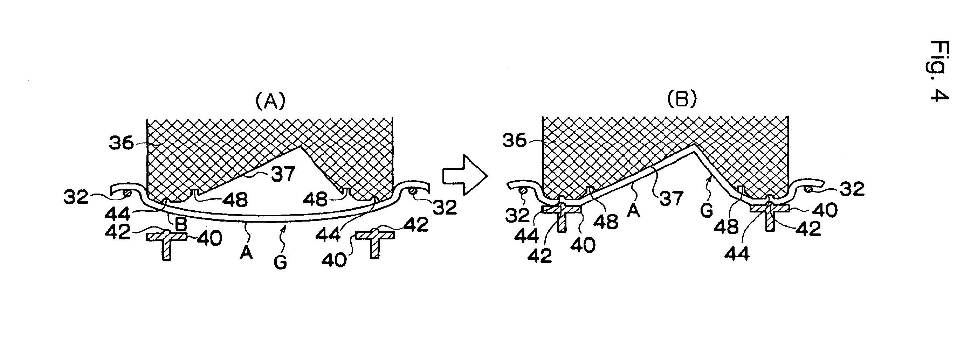

The trimming cutter 38 and the ring-shaped clamping member 40 are configured so as to be capable of moving close to and apart from (vertically with respect to) the female mold 36 by a cylinder unit (which is not shown). When the ring-shaped clamping member 40 is moved toward the female mold 36 as shown in Fig. 4(A), the peripheral end area B of the glass sheet (G), which is located at a lower position under the female mold 36, is pushed up by the clamping member 40 so that the peripheral end area B of the glass sheet G is forcibly pressed against a peripheral portion of a bending surface 37 of the female mold 36. The clamping member 40 has a convex portion 42 disposed on a surface thereof confronting the peripheral portion of the female mold 36, and the peripheral portion of the female mold 36 has a concave portion 44 formed therein so as to be engageable with the convex portion 42. By this arrangement, the clamping member 40 presses the peripheral end area B of the glass sheet G against the peripheral portion of the female mold so as to engage the convex portion 42 with the concave portion 44 as shown in Fig. 4(B). Accordingly, it is possible to improve the sealability at the time of bending by vacuum to be performed later and to perform bending operation with high precision, which can reduce the bending time.

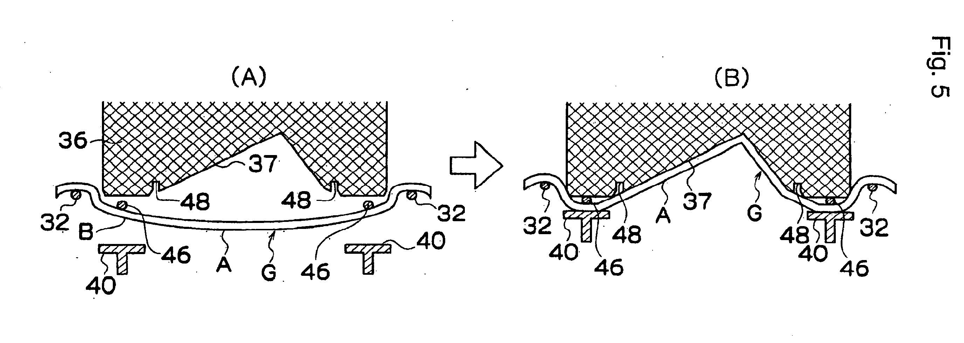

The glass sheet G may have an O-ring (ring-shaped seal) 46 put in the peripheral end area B on a surface (upper surface) thereof confronting the female mold 36 as shown in Fig. 5(A), and the clamping member 40 presses the glass sheet G against the peripheral portion of the female mold 36 as shown in Fig. 5(B), whereby the glass sheet G is fixed to the peripheral portion of the female mold 36 through the O-ring (ring-shaped seal) 46. It should be noted that reference numeral 48 indicated in Fig. 4 and Fig. 5 designates a groove for receiving the blade edge of the trimming cutter 38.

On the other hand, the female mold 36 has a plurality of air passages 50 formed therein so as to communicate with the bending surface 37 thereof for vacuum operation as shown in Fig. 2. These air passages 50 are connected to a suction pump through valves, which are not shown. As shown in Fig. 4(B) and Fig. 5(B), the bending area A of the glass sheet G is forcibly brought into close contact with the bending surface 37 of the female mold 36 by opening the valves. By this suction operation, the bending area A is formed as bent glass having a large bending curvature. Although the bending area A may be brought into close contact with the bending surface 37 by such vacuum operation, the bending area A may be forcibly brought into close contact with the bending surface 37 to be bent by forming an exhaust hole in the female mold 36 and giving a blowing pressure to a lower surface of the glass sheet G.

After that, the trimming cutter 38 is moved upward to trim the glass sheet G that has been bent by the female mold 36 (to cut out the bending area A out of the glass sheet G). The cutter 38 is formed in a shape along the peripheral edge (outline) of curved glass to be produced.

After the cutter 38 is retracted downward, the valves are activated to be open to the atmosphere in order to release the vacuum in the female mold 36, with the result that the curved glass thus cut is put on a ring (not shown) of the conveying unit 24, which is sent from the air-cooling and tempering zone 18 and substantially conforms to a peripheral end portion of the curved glass. Then, the curved glass is transferred into the air-cooling and tempering zone 18. After being air-cooled and tempered there, the curved glass is transferred into a packaging step and an inspection step. On the other hand, the conveying jig 30 is discharged outside, carrying the separated peripheral end area B thereon, by a discharge unit, which is not shown. Although the bending/trimming zone 16 in the embodiment is configured so that the female mold 36 is disposed at an upper position while the trimming cutter 38 and the clamping member are disposed at a lower position, the above-mentioned bending operation may be performed even if these members are disposed upside down.

Now, the operation of the bending apparatus 10 thus constructed will be described.

In the loading zone 12, the glass sheet G is put on the conveying jig 30 by a mechanical unit, such as a robot having a suction pad. At that time, the glass sheet G is put on the ring-shaped member 32 of the conveying jig 30 in such a way that the bending area A is located inside the ring-shaped member 32 as seen in a plan view shown in Fig. 3(C). In this way, the glass sheet G is prevented from falling out of the conveying jig 30 by its own weight since at least one portion of the peripheral end area B of the glass sheet G, which is located outside the bending area A, is supported by the ring-shaped member 32 of the conveying jig 30.

Since the portion of the conveying jig 30 corresponding to the bending area A forms the opening, the bending area A is easily heated to a bending temperature close to the softening point, being kept in a non-contact state up to the bending operation performed in the bending/trimming zone 16.

The glass sheet G, which has been put on the conveying jig 30, is heated to such a bending temperature so as to have a glass viscosity of 10⁵ Pa·s or above to 10⁸ Pa·s or below (such as, a temperature of 670°C to 830°C) by a heating unit, such as electric heaters, being conveyed through the heating zone 14.

When the glass sheet G has acquired this bending temperature, the glass sheet is transferred, along with the conveying jig 30, into the bending/trimming zone 16 by the transferring unit 22, is located under the female mold 36 and is lifted by a slight amount, followed by having the peripheral end area B brought into contact with the peripheral portion of the female mold 36 as shown in Fig. 4(A).

Since the clamping member 40 is moved upward after that, the peripheral end area B of the glass sheet G, which is located at a lower position under the female mold 36, is raised by the clamping member 40, and the peripheral end area B is forcibly pressed against the peripheral portion of the bending surface 37 of the female mold 36. At that time, the clamping member 40 presses the peripheral end portion of the glass sheet G against the peripheral portion of the female mold 36 so as to engage the convex portion 42 with the concave portion 44 as shown in Fig. 4(B), with the result that it is possible to improve the sealability in vacuum operation performed later.

Next, the valves connected to the air passages 50 of the female mold 36 are opened to create a vacuum in the female mold 36, forcibly bringing the bending area A of the glass sheet G into close contact with the bending surface 37 of the female mold 36 by suction as shown in Fig. 4(B) and Fig. 5(B). By this suction operation, the bending area A is formed as bent glass having a large bending curvature.

Next, the trimming cutter 38 is moved upward to trim the glass sheet G, which has been bent by the female mold 36.

After that, the cutter 38 is retracted downward, and the vacuum in the female mold 36 is released. The curved glass thus cut is put on the ring of the conveying unit 24, which is sent from the air-cooling and tempering zone 18 and substantially conforms to the peripheral end portion of the curved glass. Then, the curved glass is transferred into the air-cooling and tempering zone 18 by the conveying unit 24. After the curved glass is air-cooled and tempered there, the curved glass is transferred into the packaging step and the inspection step.

According to the bending apparatus 10 of this embodiment, it is possible to prevent a glass sheet G from being broken due to stress concentration caused by thermal deformation in the glass sheet, since the glass sheet G is heated to a temperature close to the softening point, being carried on the ring-shaped member 32 of the conveying jig 30. Further, when the glass sheet G is heated to such a temperature close to the softening point, not only the bending area A of the glass sheet G, which is located inside the ring-shaped member 32, is sagged by its own weight, but also the peripheral end area B of the glass sheet G, which is located outside the ring-shaped member 32, is sagged by its own weight. As a result, the peripheral end area B of the glass sheet G is engaged with (hooked over) the ring-shaped member to prevent the glass sheet G from falling from inside the ring-shaped member 32. In this way, the glass sheet G is conveyed through the heating zone 14, being stably held on the conveying jig 30, without falling before reaching the bending/trimming zone 16.

Accordingly, even if the bending area A of the glass sheet G is heated to a bending temperature close to the softening point in order to produce curved glass formed in a complicated bent shape having a large amount of deformation, the glass sheet G can be conveyed, being in a non-contact state and keeping good surface quality, without falling before reaching the bending/trimming zone 16.

In accordance with the conveying jig 30, what is required is that the form of the ring-shaped member 32 projected on a horizontal plane is larger than the outline of finally cut-out glass and smaller than the outline of the glass sheet G before heating operation. Accordingly, it is not necessary to produce different conveying jigs 30 for different forms of glass sheets G to be bent, and it is possible to commonly use a single conveying jig for a group of glass sheets, which are close to each other in terms of the sizes of forms to be bent.

It is preferred that a temperature increase in the peripheral end area B of the glass sheet G precede that in the bending area in the heating zone 14 or in a step prior to the heating zone 14. When as stated above, the production conditions are set so that the peripheral end area B acquires such a glass temperature so as to have a viscosity of 10^{10 ·}Pa·s or below before the bending area A has acquired a glass viscosity of 10¹¹ Pa·s, the deformation in the peripheral end area B is promoted to reliably engage the peripheral end area B of the glass sheet G with the ring-shaped member 32. In this way, it is possible to prevent the glass sheet G from falling from inside the ring-shaped member 32. Accordingly, the glass sheet G, which has been heated to a temperature of not lower than the softening point, is stably held on the conveying jig 30. Since the amount by which a flat glass sheet G to be produced protrudes from the conveying jig 30 is minimized, it is possible to perform the bending process by using a glass sheet G having a minimum size.

On the other hand, the ring-shaped member 32 of the conveying jig 30 is formed in a circular shape in section. The reason is as follows: The form accuracy of the ring-shaped member 32 does not directly affect the bending area A since the bending area A of curved glass, which is finally cut out, is smaller than the ring-shaped member 32 of the conveying jig 30 for a glass sheet G. In other words, the form accuracy of the ring-shaped member 32 is not required to have the same level of dimensional accuracy required for glass products. Accordingly, it is possible to simplify the structure of the ring-shaped member 32, specifically to produce the ring-shaped member by bending a solid round bar used as a versatile material. Further, the conveying jig 30 has a simple structure comprising the ring-shaped member 32 and the engageable members 34. Accordingly, even if a plurality of conveying jigs are produced to be used as conveying jigs for performing heating operation in the heating zone 14, the production costs are low, and it is possible to contribute energy saving in the heating step by a sharp decrease in heat capacity, which is caused by a weight reduction of the conveying jigs for heating operation.

The conveying jig 30 is made of heat resistant steel, such as stainless steel, because of being used in the heating zone 14 and the bending/trimming zone 16, each of which is at a high temperature. The conveying jig 30 has a mold releasing material applied or a coating having a good mold releasing property applied to the surface thereof in order to prevent a glass sheet G from being firmly stuck thereon. In this way, it is possible to prevent the glass sheet G from being firmly stuck on the ring-shaped member 32 during conveyance for heating operation.

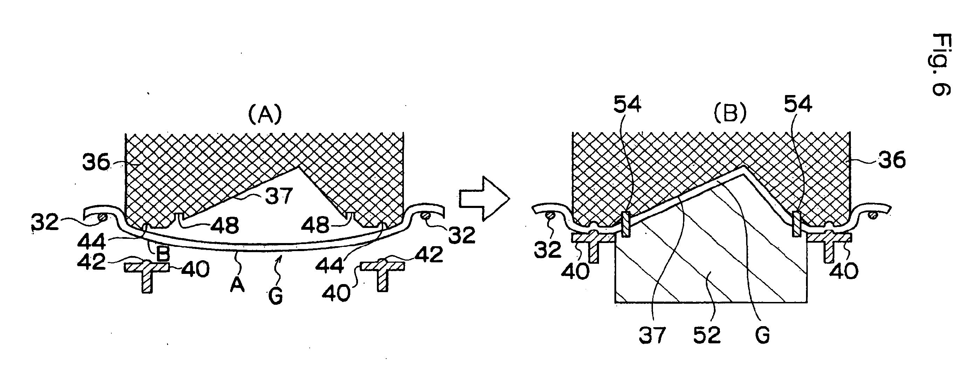

The bending area A may be formed in a shape along the bending surface 37 of the female mold 36 by using the clamping member 40 to forcibly press the peripheral end area B of a glass sheet G against the peripheral portion of the female mold 36 as shown in Figs. 6(A) 6(B), followed by pressing a male mold 52 against the bending surface 37 of the female mold 36 through the bending area, the male mold having a bending surface substantially matching the bending surface 37 of the female mold 36. When the male mold 52 has a trimming cutter 54 formed on the peripheral portion thereof, the bending operation by the male mold 52 and the trimming operation by the cutter can be simultaneously performed.

It is clear that the present invention is applicable not only to production of various kinds of glass sheets for automobiles (such as a backlite, a sidelite or a windshield) but also to production of glass sheets for rail vehicles, aircraft, ships or buildings.

## Claims

1. A method for bending a glass sheet, comprising a heating step for heating a glass sheet while putting the glass sheet on a conveying jig, the glass sheet having a bending area and a peripheral end area; a conveying step for conveying the glass sheet heated in the heating step, to a mold by the conveying jig; a bending step for bending the bending area of the glass sheet into a desired shape by the mold; and a trimming step for trimming the peripheral end area of the bent glass sheet; **characterized in**
**that** the conveying jig is configured to be smaller than the outline of the glass sheet as seen in a plan view and to include a ring-shaped member corresponding to the peripheral end area, and the conveying jig is adapted to convey the glass sheet in such a state that at least one portion of the peripheral end area is sagged by its own weight and is engaged with the ring-shaped member; and
**that** in the bending step, at least one portion of the peripheral end area of the glass sheet is sandwiched and held between a clamping member and a peripheral portion of the mold, followed by bending the bending area by the mold corresponding to the bending area.

2. The method according to Claim 1, **characterized in that** a temperature increase in the peripheral end area precedes that in the bending area in a step prior to the heating step.

3. The method according to Claim 1 or 2, **characterized in that** at least one portion of the ring-shaped member of the conveying jig is formed so as to be smaller than the outline of the glass sheet by 30 mm or above as seen in a plan view, when loading the glass sheet on the conveying jig, and
that the bending area is heated to a bending temperature close to the softening point of the glass sheet, being kept in a non-contact state with the ring-shaped member.

4. The method according to Claim 1, 2 or 3, **characterized in that** the glass sheet is heated until the glass sheet acquires such a bending temperature so as to have a viscosity of 10⁵ Pa·s or above to 10⁸ Pa·s or below in the heating step.

5. The method according to any one of Claims 1, 2, 3 or 4, **characterized in that** the peripheral end area of the glass sheet acquires such a glass temperature so as to have a viscosity of 10¹⁰ Pa·s or below before the bending area of the glass sheet has acquired such a glass temperature so as to have a glass viscosity of 10¹¹ Pa·s in the heating step or in a step prior to the heating step, and that the bending area and the peripheral end area are both sagged downward by their own weights, using the ring-shaped member as a boundary, whereby the peripheral end area is engaged with the ring-shaped member.

6. The method according to any one of Claims 1, 2, 3, 4 or 5, **characterized in that** the ring-shaped member of the conveying jig is formed in a circular shape in section.

7. The method according to any one of Claims 1, 2, 3, 4, 5 or 6, **characterized in that** the conveying jig is made of heat resistant steel, such as stainless steel, and has a mold-releasing material applied or a coating having a good mold-releasing property applied to a surface thereof in order to prevent the glass sheet from being firmly stuck thereon.

8. The method according to any one of Claims 1, 2, 3, 4, 5, 6 or 7, **characterized in that** the clamping member is formed in an annular shape and has a convex portion formed on a surface confronting the peripheral portion of the mold; and that the peripheral portion of the mold has a concave portion formed thereon so as to correspond to the convex portion of the clamping member, and the peripheral portion of the mold and the clamping member clamp the glass sheet therebetween to hold the glass sheet on the peripheral portion of the mold as if the convex portion and the concave portion are engaged with each other.

9. The method according to any one of Claims 1, 2, 3, 4, 5, 6 or 7, **characterized in that** the glass sheet has a ring-shaped seal put on a side of the peripheral end area thereof confronting the mold; and
that the glass sheet is held on the peripheral portion of the mold through the ring-shaped seal by being sandwiched between the clamping member and the peripheral portion of the mold.

10. The method according to any one of Claims 1, 2, 3, 4, 5, 6, 7, 8 or 9, **characterized in that** the bending step comprises bending the bending area of the glass sheet along a bending surface of the mold by vacuum operation and/or blowing operation.

11. The method according to any one of Claims 1,2,3,4,5,6,7,8,9 or 10, **characterized in that** the bending step comprises bending the bending area of the glass sheet along a bending surface of the mold by pressing a male mold against the bending area.

12. An apparatus for bending a glass sheet, comprising a heating section for heating a glass sheet while putting the glass sheet on a conveying jig, the glass sheet having a bending area and a peripheral end area; a conveying section for conveying the glass sheet heated in the heating step, to a mold by the conveying jig; a bending section for bending the bending area of the glass sheet into a desired shape by the mold; and a trimming section for trimming the peripheral end area of the bent glass sheet; **characterized in**
**that** the conveying jig is configured to be smaller than the outline of the glass sheet as seen in a plan view and to include a ring-shaped member corresponding to the peripheral end area, such that the bending area and the peripheral end area are both sagged downward by their own weights, using the ring-shaped member as a boundary, whereby the peripheral end area is engaged with the ring-shaped member; and
**that** the bending section includes a clamping member, and is configured so that at least one portion of the peripheral end area of the glass sheet is sandwiched and held between the clamping member and a peripheral portion of the mold, followed by bending the bending area by the mold corresponding to the bending area.

## Patentansprüche

1. Verfahren zum Biegen einer Glasplatte, das einen Erwärmungsschritt zum Erwärmen einer Glasplatte, während die Glasplatte auf einer Fördervorrichtung aufgelegt ist, wobei die Glasplatte einen Biegebereich und einen Umfangsendbereich aufweist, einen Förderschritt zum Fördern der in dem Erwärmungsschritt erwärmten Glasplatte zu einem Formwerkzeug mittels der Fördervorrichtung, einen Biegeschritt zum Biegen des Biegebereichs der Glasplatte zu einer gewünschten Form durch das Formwerkzeug und einen Zuschneideschritt zum Zuschneiden des Umfangsendbereichs der gebogenen Glasplatte umfasst, **dadurch gekennzeichnet,**
**dass** die Fördervorrichtung so ausgebildet ist, dass sie kleiner ist als der Umriss der Glasplatte, betrachtet in einer Draufsicht, und dass sie ein ringförmiges Element umfasst, das dem Umfangsendbereich entspricht, und die Fördervorrichtung angepasst ist, die Glasplatte in einem Zustand zu fördern, bei dem mindestens ein Teil des Umfangsendbereichs durch dessen Eigengewicht durchhängt und mit dem ringförmigen Element in Eingriff gelangt, und
**dass** in dem Biegeschritt mindestens ein Teil des Umfangsendbereichs der Glasplatte zwischen einem Klemmelement und einem Umfangsabschnitt des Formwerkzeugs sandwichartig angeordnet und gehalten wird, worauf der Biegebereich durch das Formwerkzeug entsprechend dem Biegebereich gebogen wird.

2. Verfahren nach Anspruch 1, **dadurch gekennzeichnet, dass** ein Temperaturanstieg in dem Umfangsendbereich dem Temperaturanstieg in dem Biegebereich in einem Schritt vor dem Erwärmungsschritt vorangeht.

3. Verfahren nach Anspruch 1 oder 2, **dadurch gekennzeichnet, dass** mindestens ein Teil des ringförmigen Elements der Fördervorrichtung so ausgebildet ist, dass er um 30 mm oder mehr kleiner ist als der Umriss der Glasplatte, betrachtet in einer Draufsicht, wenn die Glasplatte auf die Fördervorrichtung aufgebracht wird, und
dass der Biegebereich auf eine Biegetemperatur nahe an dem Erweichungspunkt der Glasplatte erwärmt wird, wobei er in einem kontaktlosen Zustand mit dem ringförmigen Element gehalten wird.

4. Verfahren nach Anspruch 1, 2 oder 3, **dadurch gekennzeichnet, dass** die Glasplatte in dem Erwärmungsschritt erwärmt wird, bis die Glasplatte eine Biegetemperatur erreicht, so dass sie eine Viskosität von 10⁵ Pa · s oder mehr bis 10⁸ Pa · s oder weniger aufweist.

5. Verfahren nach einem der Ansprüche 1, 2, 3 oder 4, **dadurch gekennzeichnet, dass** der Umfangsendbereich der Glasplatte eine Glastemperatur erreicht, so dass er eine Viskosität von 10¹⁰ Pa · s oder weniger aufweist, bevor der Biegebereich der Glasplatte eine derartige Glastemperatur erreicht hat, dass er eine Viskosität von 10¹¹ Pa · s aufweist, in dem Erwärmungsschritt oder in einem Schritt vor dem Erwärmungsschritt, und dass der Biegebereich und der Umfangsendbereich beide durch ihr Eigengewicht nach unten durchhängen, unter Verwendung des ringförmigen Elements als Grenze, wodurch der Umfangsendbereich mit dem ringförmigen Element in Eingriff gebracht wird.

6. Verfahren nach einem der Ansprüche 1, 2, 3, 4 oder 5, **dadurch gekennzeichnet, dass** das ringförmige Element der Fördervorrichtung im Querschnitt kreisförmig ausgebildet ist.

7. Verfahren nach einem der Ansprüche 1, 2, 3, 4, 5 oder 6, **dadurch gekennzeichnet, dass** die Fördervorrichtung aus einem wärmebeständigen Stahl, wie z.B. rostfreiem Stahl, hergestellt ist, und auf deren Oberfläche ein Formentrennmaterial oder eine Beschichtung mit guten Formentrenneigenschaften aufgebracht ist, so dass verhindert wird, dass die Glasplatte fest daran anhaftet.

8. Verfahren nach einem der Ansprüche 1, 2, 3, 4, 5, 6 oder 7, **dadurch gekennzeichnet, dass** das Klemmelement in einer Ringform ausgebildet ist und einen konvexen Abschnitt aufweist, der auf einer Oberfläche ausgebildet ist, die auf den Umfangsabschnitt des Formwerkzeugs gerichtet ist, und dass der Umfangsabschnitt des Formwerkzeugs einen konkaven Abschnitt aufweist, der so darauf ausgebildet ist, dass er dem konvexen Abschnitt des Klemmelements entspricht, und der Umfangsabschnitt des Formwerkzeugs und das Klemmelement die Glasplatte dazwischen klemmen, so dass die Glasplatte auf dem Umfangsabschnitt des Formwerkzeugs derart gehalten wird, als ob der konvexe Abschnitt und der konkave Abschnitt miteinander in Eingriff sind.

9. Verfahren nach einem der Ansprüche 1, 2, 3, 4, 5, 6 oder 7, **dadurch gekennzeichnet, dass** die Glasplatte eine ringförmige Dichtung aufweist, die auf einer Seite des Umfangsendbereichs davon, die auf das Formwerkzeug gerichtet ist, aufgelegt ist, und
dass die Glasplatte an dem Umfangsabschnitt des Formwerkzeugs durch die ringförmige Dichtung dadurch gehalten wird, dass sie zwischen dem Klemmelement und dem Umfangsabschnitt des Formwerkzeugs sandwichartig angeordnet wird.

10. Verfahren nach einem der Ansprüche 1, 2, 3, 4, 5, 6, 7, 8 oder 9, **dadurch gekennzeichnet, dass** der Biegeschritt das Biegen des Biegebereichs der Glasplatte entlang einer Biegeoberfläche des Formwerkzeugs durch einen Vakuumbetrieb und/oder einen Gebläsebetrieb umfasst.

11. Verfahren nach einem der Ansprüche 1, 2, 3, 4, 5, 6, 7, 8, 9 oder 10, **dadurch gekennzeichnet, dass** der Biegeschritt das Biegen des Biegebereichs der Glasplatte entlang einer Biegeoberfläche des Formwerkzeugs durch Pressen einer Patrize gegen den Biegebereich umfasst.

12. Vorrichtung zum Biegen einer Glasplatte, die einen Erwärmungsabschnitt zum Erwärmen einer Glasplatte, während die Glasplatte auf einer Fördervorrichtung aufgelegt ist, wobei die Glasplatte einen Biegebereich und einen Umfangsendbereich aufweist, einen Förderabschnitt zum Fördern der in dem Erwärmungsschritt erwärmten Glasplatte zu einem Formwerkzeug mittels der Fördervorrichtung, einen Biegeabschnitt zum Biegen des Biegebereichs der Glasplatte zu einer gewünschten Form durch das Formwerkzeug und einen Zuschneideabschnitt zum Zuschneiden des Umfangsendbereichs der gebogenen Glasplatte umfasst, **dadurch gekennzeichnet,**
**dass** die Fördervorrichtung so ausgebildet ist, dass sie kleiner ist als der Umriss der Glasplatte, betrachtet in einer Draufsicht, und dass sie ein ringförmiges Element umfasst, das dem Umfangsendbereich entspricht, so dass der Biegebereich und der Umfangsendbereich beide durch deren Eigengewichte nach unten durchhängen, wobei das ringförmige Element als eine Grenze verwendet wird, wodurch der Umfangsendbereich mit dem ringförmigen Element in Eingriff gelangt, und
**dass** der Biegeabschnitt ein Klemmelement umfasst und so ausgebildet ist, dass mindestens ein Teil des Umfangsendbereichs der Glasplatte zwischen dem Klemmelement und einem Umfangsabschnitt des Formwerkzeugs sandwichartig angeordnet und gehalten wird, worauf der Biegebereich durch das Formwerkzeug entsprechend dem Biegebereich gebogen wird.

## Revendications

1. Procédé de pliage d'une feuille de verre, comprenant une étape de chauffage pour chauffer une feuille de verre tout en plaçant la feuille de verre sur un gabarit de transport, la feuille de verre présentant une zone de pliage et une zone d'extrémité périphérique ; une étape de transport pour transporter la feuille de verre chauffée à l'étape de chauffage vers un moule à l'aide du gabarit de transport ; une étape de pliage pour plier la zone de pliage de la feuille de verre suivant une forme souhaitée par le moule ; et une étape d'ébavurage pour ébavurer la zone d'extrémité périphérique de la feuille de verre pliée ; **caractérisé en ce que**
le gabarit de transport est configuré pour être plus petit que le contour de la feuille de verre dans une vue en plan et pour comprendre un organe annulaire correspondant à la zone d'extrémité périphérique, et le gabarit de transport est adapté pour transporter la feuille de verre dans un état tel qu'au moins une portion de la zone d'extrémité périphérique est fléchie par son propre poids et est en appui avec l'organe annulaire ; et
dans l'étape de pliage, au moins une portion de la zone d'extrémité périphérique de la feuille de verre est enserrée et maintenue entre un organe de serrage et une portion périphérique du moule, suivi par le pliage de la zone de pliage par le moule correspondant à la zone de pliage.

2. Procédé selon la revendication 1, **caractérisé en ce qu'**une augmentation de température dans la zone d'extrémité périphérique précède celle de la zone de pliage dans une étape préalable à l'étape de chauffage.

3. Procédé selon la revendication 1 ou 2, **caractérisé en ce qu'**au moins une portion de l'organe annulaire du gabarit de transport est formée de façon à être plus petite que le contour de la feuille de verre de 30 mm ou plus en vue en plan, lors du chargement de la feuille de verre sur le gabarit de transport, et
**en ce que** la zone de pliage est chauffée à une température de pliage proche du point de ramollissement de la feuille de verre, qui est maintenue dans un état de non-contact avec l'organe annulaire.

4. Procédé selon la revendication 1, 2 ou 3, **caractérisé en ce que** la feuille de verre est chauffée jusqu'à ce que la feuille de verre acquière une température de pliage de façon à présenter une viscosité de 10⁵ Pa·s ou plus à 10⁸ Pa·s ou moins, à l'étape de chauffage.

5. Procédé selon l'une quelconque des revendications 1, 2, 3 ou 4, **caractérisé en ce que** la zone d'extrémité périphérique de la feuille de verre acquiert une température de transition vitreuse de façon à présenter une viscosité de 10¹⁰ Pa·s ou moins avant que la zone de pliage de la feuille de verre ait acquis une température de transition vitreuse de façon à présenter une viscosité vitreuse de 10¹¹ Pa·s dans l'étape de chauffage ou dans une étape préalable à l'étape de chauffage, et **en ce que** la zone de pliage et la zone d'extrémité périphérique sont toutes deux fléchies vers le bas par leurs propres poids, en utilisant l'organe annulaire comme limite, de sorte que la zone d'extrémité périphérique est en appui avec l'organe annulaire.

6. Procédé selon l'une quelconque des revendications 1, 2, 3, 4 ou 5, **caractérisé en ce que** l'organe annulaire du gabarit de transport présente une section de forme circulaire.

7. Procédé selon l'une quelconque des revendications 1, 2, 3, 4, 5 ou 6, **caractérisé en ce que** le gabarit de transport est en acier résistant à la chaleur, tel que l'acier inoxydable, et comporte un matériau démoulant ou un revêtement présentant une bonne propriété de démoulage appliqué sur une de ses surfaces afin d'empêcher la feuille de verre d'être collée fermement sur celle-ci.

8. Procédé selon l'une quelconque des revendications 1, 2, 3, 4, 5, 6 ou 7, **caractérisé en ce que** l'organe de serrage est de forme annulaire et comporte une portion convexe formée sur une surface face à la portion périphérique du moule ; et **en ce que** la portion périphérique du moule comporte une portion concave formée dessus de façon à correspondre à la forme convexe de l'organe de serrage, et la portion périphérique du moule et l'organe de serrage serrent la feuille de verre entre eux afin de maintenir la feuille de verre sur la portion périphérique du moule comme si la portion convexe et la portion concave étaient en appui l'une avec l'autre.

9. Procédé selon l'une quelconque des revendications 1, 2, 3, 4, 5, 6 ou 7, **caractérisé en ce que** la feuille de verre comporte un joint annulaire placé sur un côté de sa zone d'extrémité périphérique face au moule ; et
**en ce que** la feuille de verre est maintenue sur la portion périphérique du moule par le joint annulaire en étant enserrée contre l'organe de serrage et la portion périphérique du moule.

10. Procédé selon l'une quelconque des revendications 1, 2, 3, 4, 5, 6, 7, 8 ou 9, **caractérisé en ce que** l'étape de pliage comprend le pliage de la zone de pliage de la feuille de verre le long d'une surface de pliage du moule par une opération sous vide et/ou une opération de soufflage.

11. Procédé selon l'une quelconque des revendications 1, 2, 3, 4, 5, 6, 7, 8, 9 ou 10, **caractérisé en ce que** l'étape de pliage comprend le pliage de la zone de pliage de la feuille de verre le long d'une surface de pliage du moule en appuyant un moule mâle contre la zone de pliage.

12. Appareil de pliage d'une feuille de verre, comprenant une section de chauffage pour chauffer une feuille de verre tout en plaçant la feuille de verre sur un gabarit de transport, la feuille de verre présentant une zone de pliage et une zone d'extrémité périphérique ; une section de transport pour transporter la feuille de verre chauffée dans l'étape de chauffage vers un moule à l'aide du gabarit de transport ; une section de pliage pour plier la zone de pliage de la feuille de verre suivant une forme souhaitée par le moule ; et une section d'ébavurage pour ébavurer la zone d'extrémité périphérique de la feuille de verre pliée ; **caractérisé en ce que**
le gabarit de transport est configuré pour être plus petit que le contour de la feuille de verre dans une vue en plan et pour comprendre un organe annulaire correspondant à la zone d'extrémité périphérique, de sorte que la zone de pliage et la zone d'extrémité périphérique sont toutes deux fléchies vers le bas par leurs propres poids, en utilisant l'organe annulaire comme limite, moyennant quoi la zone d'extrémité périphérique est en appui avec l'organe annulaire ; et
**en ce que** la section de pliage comprend un organe de serrage, et est configurée de sorte qu'au moins une portion de la zone d'extrémité périphérique de la feuille de verre est enserrée et maintenue entre l'organe de serrage et une portion périphérique du moule, suivi par le pliage de la zone de pliage par le moule correspondant à la zone de pliage.
